# EUROPEAN PATENT SPECIFICATION

(11) **EP 3 080 521 B1**
(45) Date of publication and mention of the grant of the patent: **07.03.2018**
(21) Application number: 13824131.0
(22) Date of filing: 12.12.2013
(51) Int. Cl.: F24F 11/00, G05D 23/19, H02J 3/14

(54) **METHOD AND SYSTEM FOR CONTROLLING CONSUMPTION**
VERFAHREN UND SYSTEM FÜR VERBRAUCHSSTEUERUNG
PROCÉDÉ ET SYSTÈME DE RÉGULATION DE CONSOMMATION

(43) Date of publication of application: 19.10.2016
(73) Proprietor: Khalifa University of Science, Technology and Research, Abu Dhabi (AE); British Telecommunications public limited company, London EC1A 7AJ (GB); Emirates Telecommunications Corporation, Abu-Dhabi (AE)
(72) Inventor: SAFFRE, Fabrice, London, Greater London, EC1A 7AJ (GB); SHACKLETON, Mark Andrew, Ipswich Suffolk IP5 3RE (GB); HILDMANN, Hanno, 28007 Madrid (Madrid) (ES); NICOLAS, Sébastien, 69115 Heidelberg (DE)
(74) Representative: Hodsdon, Stephen James
(86) International application number: PCT/GB2013/053270
(87) International publication number: WO 2015/087027

(56) References cited:
- EP-A2- 2 312 718
- WO-A1-2009/122173
- US-A- 4 694 192
- US-B1- 7 809 472

## Description

### Field of the Invention

The present invention relates to methods and systems for controlling consumption, particularly power consumption. It is particularly, but not exclusively, concerned with controlling power consumption of climate control devices in a building whilst maintaining a certain level of comfort within the building.

### Background of the Invention

Building Management Systems (BMS) are well established and are used to control heating and air conditioning (AC) infrastructure so as to ensure the comfort of building inhabitants as well as to achieve other goals such as cooling of ICT equipment. In the business and corporate environment, BMS are available that can be used to obtain sensor data and set control values such as thermostat set points, remotely (e.g. see:

### https://www.trendcontrols.com/en-GB/Pages/default.aspx)

In tandem with this, energy savings (and associated cost savings) have become an important goal in recent years. Clearly there can be a trade-off between energy saving and controlling temperature using HVAC (heating, ventilation and air-conditioning) systems under BMS control. For example, reducing a thermostat setting by one degree in the UK winter will save energy, but it will typically lead to a higher percentage of dissatisfied building inhabitants.

The broader context of energy saving is energy management (EM). Here the goal is not just to reduce energy but rather to manage the consumption of energy over time to achieve certain goals. Specifically techniques such as Demand Side Management (DSM) or Demand Response (DR) can be used to time-shift energy consumption, typically to avoid peaks in energy consumption, so as to help balance energy consumption with available energy supply. Peak periods of energy consumption in the UK and many other countries equate to more costly energy generation, so reduction of demand peaks (which would otherwise exceed normally available supply) can result in avoiding buying energy at the most costly time or can result in being paid revenue by the energy provider or networks (National Grid in the UK) so that they can similarly avoid direct costs themselves. An example of this is UK National Grid's Short Term Operating Reserve (STOR) scheme.

Note that when applying climate control to buildings there is a desire to control "thermal comfort" which has been defined by the American Society of Heating, Refrigerating and Air-Conditioning Engineers (ASHRAE). A model for thermal comfort is captured in terms of PMV (predicted mean vote) and PPD (predicted percent dissatisfied) measures via equations defined in ISO 7730. This model has been used, with respect to temperature variability, to inform the measure of temperature-drift-related discomfort discussed later.

The Demand Response Research Center (DRRC, Lawrence Berkeley National Laboratory) has published a comprehensive report "Introduction to Commercial Building Control Strategies and Techniques for Demand Response":

### http://gala.lbl.gov/btech/papers/59975.pdf

This guide gives a good summary of available approaches and in particular discusses the following DR strategies for HVAC systems:
- Global Temperature Adjustment of Zones
- Systemic Adjustments to the Air Distribution and/or Cooling Systems.

Section 3.4.1 of this report states that: "Demand limit strategy is a supervisory control algorithm that manages a combination of single or multiple DR control strategies. When the whole building demand exceeds a warning level, the EMCS deploys strategy #1. If the whole building demand still exceeds the warning level, strategy #2 is deployed, and so on. Thus, whenever the demand hits the warning level, the whole building demand is suppressed by a combination of sequential strategies. Strategies that have a lower impact on occupants' comfort should come first, and strategies that have more impact should come later. When the demand goes below the lower deadband level, the last strategy should be deployed. For any strategy that may have a risk of causing a rebound peak, slow recovery strategies must be considered.

Demand limit strategy has been considered as a method to avoid high demand charges during normal operation, rather than as a demand response strategy. However, depending on the structure of demand response programs, demand limit strategy can be a very useful tool to achieve desired kW savings. For example, demand bidding programs offered by many utility companies require curtailing a preset kW demand against a baseline defined by each utility. If the EMCS has a function to develop dynamic demand limit setpoints based on the baseline, the demand limit target can be set as shown in Equation 1, so that the desired demand savings can always be achieved.

### Equation 1: [Demand limit target] = [Baseline] - [Desired demand savings]"

Control of HVAC units / infrastructure has been proposed that is sensitive to occupancy of buildings. E.g. "Occupancy Based Demand Response HVAC Control Strategy" at http://andes.ucmerced.edu/papers/Erickson10a.pdf. This can help promote energy saving but does not seek to meet a specific energy cap.

In WO/2009/122173, one of the inventors of the present application set out a method of scheduling usage of resources to provide for a degree of DSM.

It is an object of the present invention to provide a building management system, a method of operation and individual climate control appliances which provide an overall cap on the power consumption whilst maintaining a desired level of comfort within the area being controlled.

Whilst the aims of the present invention are most relevant to commercial buildings, they could in principle be applied in a residential context too, where the goal might be to meet an energy cap across a number of rooms or more likely a number of households. In the latter case it might be part of a lower tariff energy package where DR is permitted by a householder so as to have a better deal on energy costs.

Aspects of the present invention could also be used to help identify and prioritise which rooms or areas within a building which could have reduced A/C (or heating, or other climate control) whilst still maintaining an acceptable temperature range, thereby contributing into a DR/DSM scheme.

### Summary of the Invention

At their broadest, methods of the present invention provide a method of controlling power consumption in a plurality climate control appliances by imposing a local cap and thereby probabilistically limit the aggregated power load of the plurality of climate control appliances, whilst seeking to minimize the deviation from target environmental conditions.

A first aspect of the present invention provides a method of controlling power consumption in a plurality of climate control appliances, each of which is connected to a plurality of neighbouring appliances and has a running cycle of predetermined length, the method including the steps of: setting a cap for the power consumption of each group of appliances comprising an appliance and its neighbours; setting a threshold value for a climate parameter separating values for said parameter into a preferred direction and a non-preferred direction; and when a first of said climate control appliances reaches the end of its running cycle: measuring a climate parameter associated with the area around said first climate control appliance; the first climate control appliance determining whether being inactive for the following running cycle will result in said climate parameter falling on the preferred side of said threshold value; if so, said first appliance being placed in an inactive state for its next running cycle; if not, the first appliance: causing each of its neighbouring appliances which is currently active to determine the climate parameter associated with the area around that appliance at the end of its current running cycle if the appliance was to become inactive; determining a subset of the first appliance and the currently active neighbouring appliances which should be active, the subset being those appliances for which the determined climate parameter is least preferred and the number of appliances in said subset being selected so as to ensure that said cap is not exceeded.

The climate parameter may be, for example, temperature, humidity or airflow. The climate control appliances may be, for example, heaters, chillers, air conditioning units, humidifiers, driers, air vents, or controllable window blinds.

The method of this aspect can make use of dynamic and fine-grained local decision-making, informed by real-time sensor readings. This means that the method can take into account special, changing and/or unforeseen circumstances in individual rooms or areas, which cannot be done by applying a sequence of pre-calculated policies.

Although the main objective of the method is to (probabilistically) enforce a power cap, the technique also aims to simultaneously minimize discomfort of occupants which arises due to local temperatures (or other climate conditions) drifting too far from desired (specified) levels. In this regard the inventors have discovered that extremes of temperature variation are reduced by applying a method embodying this aspect, when compared to say simply changing local thermostat set points by a fixed amount such as 1 degree C.

By using distributed decision making, including a projection-based local decision mechanism, this method may avoid unnecessary temperature "overshoot" by taking account of (inferable) thermal parameters of heat loss/gain rates from the area surrounding each appliance.

The method of this aspect ensures that the target cap (which can be expressed, for example, as the fraction of appliances allowed to operate concurrently) is locally enforced, which leads to the same proportional target cap (proportion of active appliances) being closely approximated on a global level.

In a development of this aspect, as well as setting a power cap, it is also possible to set a discomfort threshold which if breached could be used to alert a central or wider building management system to enact other demand reduction strategies, which may include a general, or local relaxation of the cap.

Overall the method of the present aspect is likely to lead to some overall energy savings as the climate parameter is allowed to drift during periods of power capping, reducing total consumption by the appliances. After applying the method of this aspect for some time it may be discovered that apparent discomfort is in fact at an acceptable level in some zones, which could lead to longer term adjustments and energy savings becoming possible.

As it is based at an appliance level, the method of the present aspect can take into account the influence of external factors and variables (e.g. temperature) on the priority level of "competing" processes. By contrast, in the prior art, typically only the aggregated load/price was taken into consideration to determine if a particular process/load was allowed to start.

These differences can be seen from way in which the present aspect uses direct "negotiation" between the first appliance and its neighbours. Prioritization of operation can therefore be determined on a one-to-one basis (as opposed to being the result of what amounts to a "one-to-many" comparison).

The method of the present aspect also allows for interrupting one or more on-going processes if it is determined that this is required for the greater good of the first appliance and its neighbours.

Preferably the method further includes the step of placing all appliances in said group which are not in said determined subset in an inactive state.

In a preferred implementation of this aspect the step of causing involves the sub-step of: the first climate control appliance sending a message to each of its neighbouring appliances, and the step of determining involves the sub-steps of: each neighbouring appliance which is currently active sending the results of its determination to the first appliance; and the first appliance communicating an instruction to become inactive to any currently active appliance which is not in said subset.

The method may further include the steps of: determining the occupancy of an area served by at least one of said climate control appliances; and setting said cap for the group of appliances comprising said at least one climate control appliance based on said determination of occupancy. By determining the occupancy of an area or zone, it may be possible to identify areas or zones for which the climate control is not currently necessary. Such areas or zones could then be given lower local caps (or all appliances in that area could be switched off) and the remaining occupied zones have their caps increased accordingly whilst maintaining an overall cap on the demand.

The method may further include the step of adjusting said cap for one or more of said groups of appliances or removing said cap for one or more of said groups of appliances by incrementally increasing said cap over a predetermined period of time. In this way, the method may allow for a controlled relaxation of the cap. For example, after a period of power capping, the cap may be removed entirely. However, it may be desirable to avoid a rapid "rebound" which may result in an energy demand spike as a result of all (or a large proportion) of appliances switching on as soon as the cap is removed. Therefore the method may be arranged to remove a cap in stages by adjusting the capping level over a period of time.

The cap may be dynamically adjusted to match the demand level of said plurality of climate control appliances to a time-varying power supply level. A particular implementation of this would be to dynamically match demand levels to time-varying changes in supply levels from local renewable sources. The output from renewable energy sources (e.g. solar panels, wind generators) can be very variable and matching demand levels to those supply levels by dynamically varying the cap applied can maximise the use of those sources.

The method of the present aspect may include any combination of some, all or none of the above described preferred and optional features.

The methods of the above aspect is preferably implemented by a climate control appliance according to the second aspect of this invention and/or in a building management system according to the third aspect of this invention, as described below, but need not be.

Further aspects of the present invention include computer programs for running on computer systems which carry out the methods of the above aspect, including some, all or none of the preferred and optional features of that aspect.

At their broadest, devices of the present invention provide climate control appliances which are arranged to collectively control their power consumption to a selected value, whilst seeking to minimize the deviation from target environmental conditions.

A second aspect of the present invention provides a climate control appliance which is connected to a plurality of neighbouring climate control appliances and has a running cycle of predetermined length, the climate control appliance having a processor which is arranged to: when said climate control appliance reaches the end of its running cycle: measure a climate parameter associated with the area around said climate control appliance; determine whether being inactive for the following running cycle will result in said climate parameter falling on the preferred side of a predetermined threshold value for said climate parameter which separates values for said parameter into a preferred direction and a non-preferred direction; if so, place said appliance in an inactive state for its next running cycle; if not: communicate with each of its neighbouring appliances which is currently active to cause those appliances to determine the climate parameter associated with the area around that appliance at the end of its current running cycle if the appliance was to become inactive; and determine a subset of said appliance and the currently active neighbouring appliances which should be active, the subset being those appliances for which the determined climate parameter is least preferred and the number of appliances in said subset being selected so as to ensure that a predetermined cap for the power consumption of the group of appliances comprising said appliance and its neighbours is not exceeded.

The climate parameter may be, for example, temperature, humidity or airflow. The climate control appliances may be, for example, heaters, chillers, air conditioning units, humidifiers, driers, air vents, or controllable window blinds.

The climate control appliance of this aspect can make use of dynamic and fine-grained local decision-making, informed by real-time sensor readings. This means that the climate control appliance can take into account special, changing and/or unforeseen circumstances in individual rooms or areas, which cannot be done by applying a sequence of pre-calculated policies.

Although the main objective of the climate control appliance is to (probabilistically) enforce a power cap, the technique also aims to simultaneously minimize discomfort of occupants which arises due to local temperatures (or other climate conditions) drifting too far from desired (specified) levels. In this regard the inventors have discovered that extremes of temperature variation are reduced by using climate control appliances embodying this aspect, when compared to say simply changing local thermostat set points by a fixed amount such as 1 degree C.

By using distributed decision making, including a projection-based local decision mechanism, this climate control appliance may avoid unnecessary temperature "overshoot" by taking account of (inferable) thermal parameters of heat loss/gain rates from the area surrounding each appliance.

The climate control appliance of this aspect ensures that the target cap (which can be expressed, for example, as the fraction of appliances allowed to operate concurrently) is locally enforced, which leads to the same proportional target cap (proportion of active appliances) being closely approximated on a global level.

In a development of this aspect, as well as setting a power cap, it is also possible to set a discomfort threshold which if breached could be used to alert a central or wider building management system to enact other demand reduction strategies, which may include a general, or local relaxation of the cap.

Overall the climate control appliance of the present aspect is likely to lead to some overall energy savings as the climate parameter is allowed to drift during periods of power capping, reducing total consumption by the appliances. After using climate control appliances of this aspect for some time it may be discovered that apparent discomfort is in fact at an acceptable level in some zones, which could lead to longer term adjustments and energy savings becoming possible.

As it is based at an appliance level, the present aspect can take into account the influence of external factors and variables (e.g. temperature) on the priority level of "competing" processes. By contrast, in the prior art, typically only the aggregated load/price was taken into consideration to determine if a particular process/load was allowed to start.

These differences can be seen from way in which the present aspect uses direct "negotiation" between the appliance and its neighbours. Prioritization of operation can therefore be determined on a one-to-one basis (as opposed to being the result of what amounts to a "one-to-many" comparison).

The climate control appliance of the present aspect can also interrupt one or more on-going processes if it is determined that this is required for the greater good of the appliance and its neighbours.

In a preferred implementation of this aspect the processor is further arranged to: send and receive messages to/from each of the neighbouring appliances, said messages including: an instruction for the neighbouring appliance to determine the climate parameter associated with the area around that appliance at the end of its current running cycle if the appliance was to become inactive; the results of such a determination; and an instruction to a selected a currently active appliance which is not in said subset to become inactive.

The climate control appliance may further include an occupancy determination sensor which is arranged to determine the occupancy of an area served by said climate control appliance, and wherein the processor is further arranged to set said cap for the group of appliances comprising said climate control appliance based on said determination of occupancy. By determining the occupancy of an area or zone, it may be possible to identify areas or zones for which the climate control is not currently necessary. Such areas or zones could then be given lower local caps (or all appliances in that area could be switched off) and the remaining occupied zones have their caps increased accordingly whilst maintaining an overall cap on the demand.

The processor may be arranged to receive an instruction from an external controller to adjust said cap to a new level, or to remove said cap, and to respond to said instruction by incrementally increasing said cap over a predetermined period of time. In this way, the appliance may allow for a controlled relaxation of the cap. For example, after a period of power capping, the cap may be removed entirely. However, it may be desirable to avoid a rapid "rebound" which may result in an energy demand spike as a result of all (or a large proportion) of appliances switching on as soon as the cap is removed. Therefore the appliance may be arranged to remove a cap in stages by adjusting the capping level over a period of time.

The cap may be dynamically adjusted to match the demand level of said plurality of climate control appliances to a time-varying power supply level. A particular implementation of this would be to dynamically match demand levels to time-varying changes in supply levels from local renewable sources. The output from renewable energy sources (e.g. solar panels, wind generators) can be very variable and matching demand levels to those supply levels by dynamically varying the cap applied can maximise the use of those sources.

The climate control appliance of this aspect preferably operates by carrying out the relevant steps of a method according to the first aspect described above.

The climate control appliance of the present aspect may include any combination of some, all or none of the above described preferred and optional features.

At their broadest, systems of the present invention provide a building management system which is arranged to control the power consumption of a plurality of climate control appliances to a selected value by localised capping, whilst seeking to minimize the deviation from target environmental conditions.

A third aspect of the present invention provides a building management system comprising a plurality of climate control appliances each of which is connected to a plurality of neighbouring appliances and having a running cycle of predetermined length, each climate control appliance having a processor which is arranged to: when said climate control appliance reaches the end of its running cycle: measure a climate parameter associated with the area around said climate control appliance; determine whether being inactive for the following running cycle will result in said climate parameter falling on the preferred side of a predetermined threshold value for said climate parameter which separates values for said parameter into a preferred direction and a non-preferred direction; if so, place said appliance in an inactive state for its next running cycle; if not: communicate with each of its neighbouring appliances which is currently active to cause those appliances to determine the climate parameter associated with the area around that appliance at the end of its current running cycle if the appliance was to become inactive; and determine a subset of said appliance and the currently active neighbouring appliances which should be active, the subset being those appliances for which the determined climate parameter is least preferred and the number of appliances in said subset being selected so as to ensure that a predetermined cap for the power consumption of the group of appliances comprising said appliance and its neighbours is not exceeded.

The climate parameter may be, for example, temperature, humidity or airflow. The climate control appliances may be, for example, heaters, chillers, air conditioning units, humidifiers, driers, air vents, or controllable window blinds.

Preferably all appliances in said group which are not in said determined subset are placed in an inactive state.

The climate control appliance of this aspect can make use of dynamic and fine-grained local decision-making, informed by real-time sensor readings. This means that the climate control appliance can take into account special, changing and/or unforeseen circumstances in individual rooms or areas, which cannot be done by applying a sequence of pre-calculated policies.

Although the main objective of the climate control appliance is to (probabilistically) enforce a power cap, the technique also aims to simultaneously minimize discomfort of occupants which arises due to local temperatures (or other climate conditions) drifting too far from desired (specified) levels. In this regard the inventors have discovered that extremes of temperature variation are reduced by using climate control appliances embodying this aspect, when compared to say simply changing local thermostat set points by a fixed amount such as 1 degree C.

By using distributed decision making, including a projection-based local decision mechanism, this climate control appliance may avoid unnecessary temperature "overshoot" by taking account of (inferable) thermal parameters of heat loss/gain rates from the area surrounding each appliance.

The climate control appliance of this aspect ensures that the target cap (which can be expressed, for example, as the fraction of appliances allowed to operate concurrently) is locally enforced, which leads to the same proportional target cap (proportion of active appliances) being closely approximated on a global level.

In a development of this aspect, as well as setting a power cap, it is also possible to set a discomfort threshold which if breached could be used to alert a central or wider building management system to enact other demand reduction strategies, which may include a general, or local relaxation of the cap.

Overall the climate control appliance of the present aspect is likely to lead to some overall energy savings as the climate parameter is allowed to drift during periods of power capping, reducing total consumption by the appliances. After using climate control appliances of this aspect for some time it may be discovered that apparent discomfort is in fact at an acceptable level in some zones, which could lead to longer term adjustments and energy savings becoming possible.

As it is based at an appliance level, the present aspect can take into account the influence of external factors and variables (e.g. temperature) on the priority level of "competing" processes. By contrast, in the prior art, typically only the aggregated load/price was taken into consideration to determine if a particular process/load was allowed to start.

These differences can be seen from way in which the present aspect uses direct "negotiation" between the appliance and its neighbours. Prioritization of operation can therefore be determined on a one-to-one basis (as opposed to being the result of what amounts to a "one-to-many" comparison).

The climate control appliance of the present aspect can also interrupt one or more on-going processes if it is determined that this is required for the greater good of the appliance and its neighbours.

In a preferred implementation of this aspect the processor of each device is further arranged to: send and receive messages to/from each of the neighbouring appliances, said messages including: an instruction for the neighbouring appliance to determine the climate parameter associated with the area around that appliance at the end of its current running cycle if the appliance was to become inactive; the results of such a determination; and an instruction to a selected a currently active appliance which is not in said subset to become inactive, and wherein: a first climate control appliance which has reached the end of its running cycle is arranged to send a message to each of its neighbouring appliances; each neighbouring appliance which is currently active is arranged to send the results of its determination to the first appliance; and the first appliance is arrange to communicate an instruction to become inactive to any currently active appliance which is not in said subset.

Each appliance may further include an occupancy determination sensor which is arranged to determine the occupancy of an area served by said climate control appliance, and wherein the processor is further arranged to set said cap for the group of appliances comprising said climate control appliance based on said determination of occupancy. By determining the occupancy of an area or zone, it may be possible to identify areas or zones for which the climate control is not currently necessary. Such areas or zones could then be given lower local caps (or all appliances in that area could be switched off) and the remaining occupied zones have their caps increased accordingly whilst maintaining an overall cap on the demand.

The building management system may further include a controller for said climate control appliances, wherein the processor of each appliance is arranged to receive an instruction from an external controller to adjust said cap to a new level, or to remove said cap, and to respond to said instruction by incrementally increasing said cap over a predetermined period of time. For example, after a period of power capping, the cap may be removed entirely. However, it may be desirable to avoid a rapid "rebound" which may result in an energy demand spike as a result of all (or a large proportion) of appliances switching on as soon as the cap is removed. Therefore the appliance may be arranged to remove a cap in stages by adjusting the capping level over a period of time.

The building management system may further include a controller for said climate control appliances, wherein said controller is arranged to dynamically adjust said cap to match the demand level of said plurality of climate control appliances to a time-varying power supply level. A particular implementation of this would be to dynamically match demand levels to time-varying changes in supply levels from local renewable sources. The output from renewable energy sources (e.g. solar panels, wind generators) can be very variable and matching demand levels to those supply levels by dynamically varying the cap applied can maximise the use of those sources.

The system of this aspect preferably operates by carrying out a method according to the above described first aspect.

The system of the present aspect may include any combination of some, all or none of the above described preferred and optional features.

### Brief Description of the Drawings

Embodiments of the invention will now be described by way of example with reference to the accompanying drawings in which:

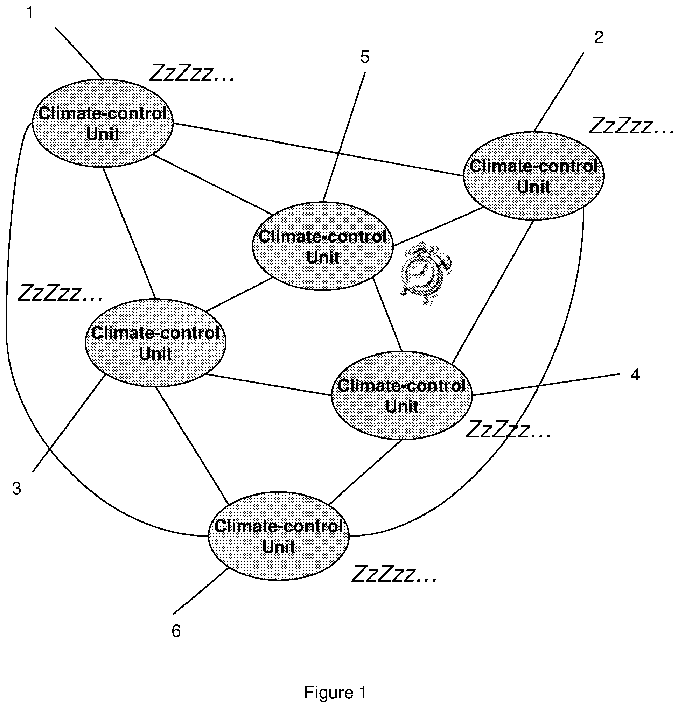

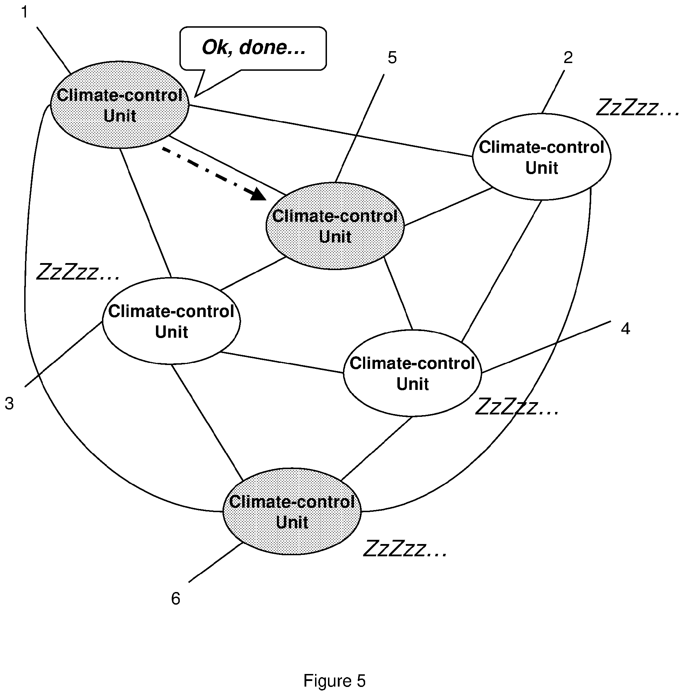

Figures 1 to 5 show, in schematic form, a plurality of climate control devices according to an embodiment of the present invention and the operation of a method according to a further embodiment of the present invention for controlling the power consumption of those devices.

### Detailed Description

A Building Management System (BMS) is designed to orchestrate operation of a variety of appliances in order to meet certain targets (in terms, e.g., of power consumption and/or environmental conditions), usually specified in the form of policies.

The embodiments of the present invention provide methods for probabilistically limiting (i.e. capping) the aggregated power load of a population of climate control appliances (such as heaters and/or air-conditioning units) to an arbitrary value, whilst minimizing deviation from target environmental conditions and hence inconvenience to the occupants of the building.

For the sake of clarity the embodiments described herein will solely relate to situations in which each climate control appliance is a heating device and the affected environmental condition is temperature. However, it will be understood that the same techniques could be readily applied to control other variables (or a combination of such variables) including, but not limited to, humidity or brightness, and to other appliances. It will also be understood that, in certain circumstances, it will be desired to keep the environmental condition in question above a certain level (e.g. the temperature when the predominant requirement is for heating of the building in a cold climate), whilst in other circumstances it will be desired to keep the environmental condition below a certain level (e.g. the temperature when the predominant requirement is for the cooling or air conditioning of a building in a hot climate). In certain implementations, the BMS may be adjustable to deal with both such conditions (or a plurality of such conditions), for example as a result of seasonal variations in temperature or humidity.

The operation of a building management system according to an embodiment of the present invention is shown schematically in Figures 1-5. In the building management method according to an embodiment of the invention which is implemented by the BMS, every climate-control appliance makes an independent decision to switch/stay on/off based on the expected or projected deviation from a target in either case after a certain period of (in)activity.

So instead of simply relying on a thermostat which would switch on the heater as soon as the temperature reading falls below a certain value and switch it off when exceeding it, each appliance is able to determine whether running for a certain period will bring the area that it affects further from or closer to a target than remaining inactive for the same amount of time.

This local decision is completely asynchronous in that it does not require different appliances to complete their operation cycle at the same time. Instead a device reaching the end of its cycle (subsequently referred to as the "trigger") and choosing to switch/stay on will force a check of the local neighborhood (itself and its logical neighbors).

Figure 1 shows an example situation in a network of six climate-control (heating) units 1-6. Each unit is directly connected to four other units which are considered to be its immediate "neighbour" units.

In the state shown in Figure 1, four of the units (1-4) are active, whilst the remaining two (5 & 6) are inactive. For the purposes of this embodiment, a power "cap" of 80% is stipulated by the BMS. It can be seen that for any selected unit and its immediate neighbours, in the situation shown in Figure 1, this power cap is observed.

At the point shown in Figure 1, one of the inactive units (shown by reference 5) has reached the end of its operation cycle and determines that, if it was to stay inactive for a further cycle, its local temperature would be below the target temperature. Furthermore, this unit 5 determines that if it was to simply activate itself, then the power cap of 80% would be exceeded as all of the unit's immediate neighbour units 1-4 are currently active.

A unit may be aware of the status of its neighbouring units in a number of ways. For example, a unit may keep a record based on the history of activation of units. In another example, each unit which reaches the end of its cycle activates itself briefly before going back to sleep if it is determined that the unit should be inactive for the next cycle (see below). Each unit communicates a change in its status to its neighbouring units and therefore the neighbouring units will become aware of the status.

It is noted that the building management system and method of this embodiment may result in both local and potentially global overshoot of the cap. For example it is possible that whilst a unit is permitted to activate based on an analysis of the activity of its neighbouring units, this may result in one or more of its neighbouring units ending up in a group of its own neighbouring units which exceeds the cap. However, this situation will be rectified when an active unit in a group of units which has overshot the cap next reaches the end of its cycle. Moreover, when averaged over all of the units under the control of the building management system, such local variations may average out in most circumstances.

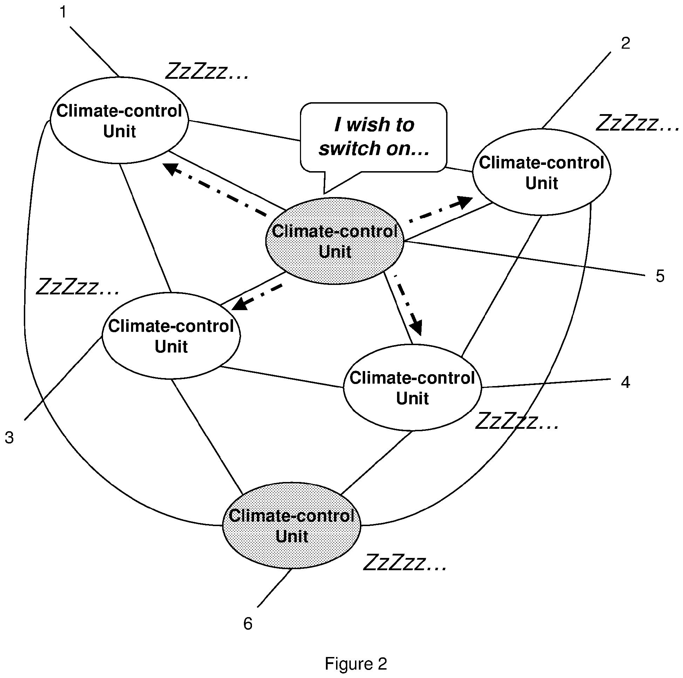

As such, this unit 5 acts as the local trigger and communicates with its desire to switch on/remain on to its immediate neighbour units 1-4 (as shown in Figure 2). The asynchronous nature of the decision making in this embodiment is illustrated in Figure 2 as all the neighbouring units 1-4 are not at their cycle end, but respond to the trigger action from the trigger unit 5.

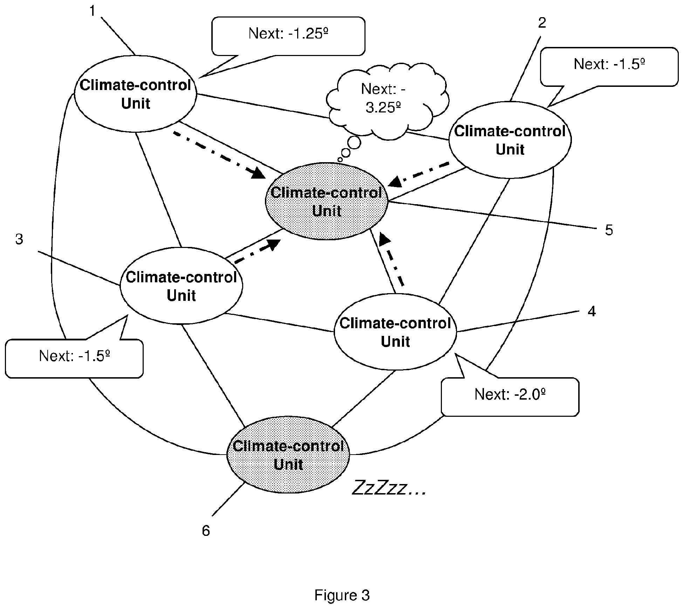

As shown in Figure 3, in response to the trigger action from the trigger unit 5, each of the neighbour units 1-4 and the trigger unit 5 calculate the effect on their local temperature if they were to change their state to inactive (or remain inactive) until the end of their current cycle. These results are communicated back to the trigger unit 5. In this embodiment and example shown in Figure 3, all of the neighbour units 1-4 make this calculation and communicate the results to the trigger unit. However, it is only necessary that the currently active units communicate this information as the subsequent selection of which unit(s) power down and/or remain inactive is only made between those units.

If the number of active appliances or the number of appliances desiring to be active is found to exceed the cap locally (i.e. within the trigger unit and its neighbours), a collective decision process is initiated to identify the sub-set of appliances that can be switched off and result in the lowest possible inconvenience (i.e., in this embodiment, the negative drift from the desired temperature set-point).

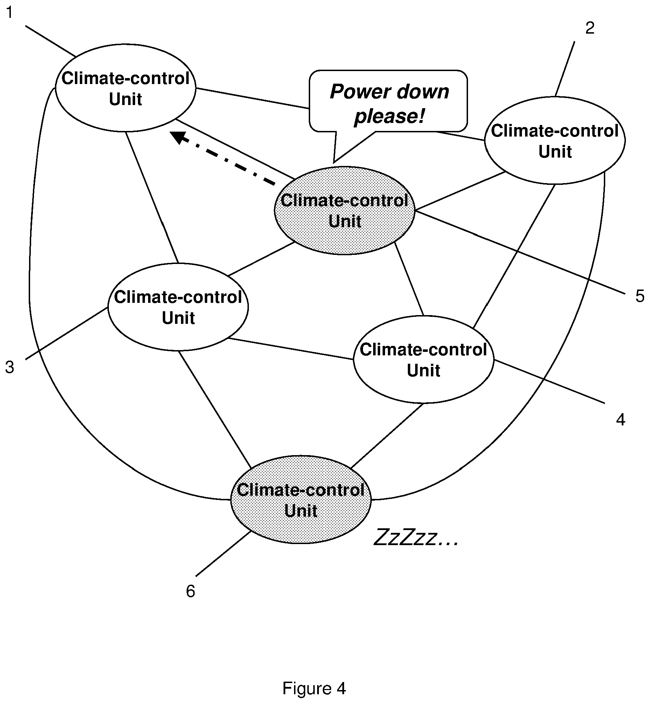

Having received the calculations from its neighbouring units, the trigger unit 5 determines how many of the units can be active for the cap to be respected and how many of the units are currently active or desire to be active (based on the calculations received). The trigger unit 5 then sorts the projections received (including its own) by order of increasing occupant inconvenience (i.e. deviation from the set-point). The trigger unit 5 then determines that the first n units in the resulting list should be powered down/remain inactive (where n = Number of active units - Cap). Finally, the trigger unit 5 sends a "switch off" message to the identified units (see Figure 4 - if the only identified unit is the trigger unit 5 itself, then no message is required and the trigger unit 5 either powers down, or remains inactive for the next cycle).

It will be appreciated that other methods of performing this determination could be used, and the above method is given by way of example only.

In a final step, if the trigger unit 5 has determined that it should be amongst the units to be active, then, once it has determined that all units to which the "switch off" message has been sent have indeed powered down, the trigger unit 5 itself can power up and the local cap will be respected. This determination may be as a result of reply messages from the units powering down, or as a result of the trigger unit 5 being able to detect the change in status of the relevant neighbour unit(s).

In further embodiments, the system may also include occupation sensors (for example PIR devices) which could identify zones for which comfort control is no longer necessary. These zones could be given lower local caps (or all appliances in that area could be switched off) and the remaining occupied zones have their caps increased accordingly.

In other embodiments the system may allow for a controlled relaxation of a consumption cap. After a period of power capping (for example to meet a particular consumption target within a specified period), the cap may be removed entirely. However, it is often desirable to avoid a rapid "rebound" which may result in an energy demand spike as a result of all (or a large proportion) of appliances switching on as soon as the cap is removed. Therefore the system may be arranged to remove a cap in stages by adjusting the capping level over a period of time. For example, from a cap of 70% of appliances active, the system may increase the cap to 80% of appliances active for the 30 minute period immediately after the cap has been removed and to 90% of appliances active for the next 30 minute period, before uncapped operation (i.e. operation driven only by the comfort parameter requirements) thereafter.

The system could also be used to dynamically match demand levels in the building to time-varying changes in supply levels from local renewable sources. The output from renewable energy sources (e.g. solar panels, wind generators) can be very variable and matching demand levels to those supply levels by dynamically varying the cap applied can maximise the use of those sources.

In such scenarios, a degree of centralised control may be required and so the building management system may include a controller. However, aside from communicating changes in the cap to the units, the central controller generally does get involved in the decision-making about which appliances are active at any particular time.

In some embodiments, it may also be provided that each appliance, or a number of the units, selected such that at least one appliance in each group of neighbouring appliances is contained in that number, has a controller which is able to make an independent decision about the cap value to be applied in that group based on local information (e.g. from a sensor or data-feed from the local renewable sources as to the level of supply).

The system may provide for additional or alternative demand reduction initiatives when a threshold level of discomfort is reached (as measured by the climate parameter).

The system may also allow over-riding of the power cap in the event that a threshold discomfort level is reached, either in the building as a whole, or within a specified zone of a building. This provides for a trade-off in extreme climatic circumstances.

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. Preferably the computer system has a monitor to provide a visual output display (for example in the design of the business process). The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention as disclosed by the appended claims.

## Claims

1. A method of controlling power consumption in a plurality of climate control appliances (1, 2, 3, 4, 5, 6), each of which is connected to a plurality of neighbouring appliances and has a running cycle of predetermined length, the method including the steps of:
setting a cap for the power consumption of each group of appliances comprising an appliance (1, 2, 3, 4, 5, 6) and its neighbours;
setting a threshold value for a climate parameter separating values for said parameter into a preferred direction and a non-preferred direction;
**characterised in that**:
when a first of said climate control appliances (5) reaches the end of its running cycle:
measuring a climate parameter associated with the area around said first climate control appliance (5);
the first climate control appliance (5) determining whether being inactive for the following running cycle will result in said climate parameter falling on the preferred side of said threshold value;
if so, said first appliance (5) being placed in an inactive state for its next running cycle;
if not, the first appliance (5):
causing each of its neighbouring appliances which is currently active to determine the climate parameter associated with the area around that appliance at the end of its current running cycle if the appliance was to become inactive;
determining a subset of the first appliance (5) and the currently active neighbouring appliances which should be active, the subset being those appliances for which the determined climate parameter is least preferred and the number of appliances in said subset being selected so as to ensure that said cap is not exceeded.

2. A method according to claim 1, further including the step of placing all appliances in said group which are not in said determined subset in an inactive state.

3. A method according to claim 1 or claim 2, wherein the step of causing involves the sub-step of:
the first climate control appliance (5) sending a message to each of its neighbouring appliances,
and the step of determining involves the sub-steps of:
each neighbouring appliance which is currently active sending the results of its determination to the first appliance (5); and
the first appliance (5) communicating an instruction to become inactive to any currently active appliance which is not in said subset.

4. A method according to any one of claims 1 to 3, further including the steps of:
determining the occupancy of an area served by at least one of said climate control appliances (1, 2, 3, 4, 5, 6); and
setting said cap for the group of appliances comprising said at least one climate control appliance based on said determination of occupancy.

5. A method according to any one of claims 1 to 4, further including the step of:
adjusting said cap for one or more of said groups of appliances or removing said cap for one or more of said groups of appliances by incrementally increasing said cap over a predetermined period of time.

6. A method according to any one of claims 1 to 5, wherein the cap is dynamically adjusted to match the demand level of said plurality of climate control appliances (1, 2, 3, 4, 5, 6) to a time-varying power supply level.

7. A climate control appliance (5) which is connected to a plurality of neighbouring climate control appliances (1, 2, 3, 4, 6) and has a running cycle of predetermined length, the climate control appliance having a processor;
**characterised in that** the processor is adapted to:
when said climate control appliance (5) reaches the end of its running cycle:
measure a climate parameter associated with the area around said climate control appliance (5);
determine whether being inactive for the following running cycle will result in said climate parameter falling on the preferred side of a predetermined threshold value for said climate parameter which separates values for said parameter into a preferred direction and a non-preferred direction;
if so, place said appliance (5) in an inactive state for its next running cycle;
if not:
communicate with each of its neighbouring appliances which is currently active to cause those appliances to determine the climate parameter associated with the area around that appliance at the end of its current running cycle if the appliance was to become inactive; and
determine a subset of said appliance (5) and the currently active neighbouring appliances which should be active, the subset being those appliances for which the determined climate parameter is least preferred and the number of appliances in said subset being selected so as to ensure that a predetermined cap for the power consumption of the group of appliances comprising said appliance and its neighbours is not exceeded.

8. A climate control appliance (5) according to claim 7, wherein the processor is further arranged to:
send and receive messages to/from each of the neighbouring appliances (1, 2, 3, 4, 6), said messages including: an instruction for the neighbouring appliance to determine the climate parameter associated with the area around that appliance at the end of its current running cycle if the appliance was to become inactive; the results of such a determination; and an instruction to a selected a currently active appliance which is not in said subset to become inactive.

9. A climate control appliance (5) according to claim 7 or claim 8, wherein the appliance (5) further includes an occupancy determination sensor which is arranged to determine the occupancy of an area served by said climate control appliance (5), and wherein the processor is further arranged to set said cap for the group of appliances comprising said climate control appliance based on said determination of occupancy.

10. A climate control appliance (5) according to any one of claims 7 to 9, wherein the processor is arranged to receive an instruction from an external controller to adjust said cap to a new level, or to remove said cap, and to respond to said instruction by incrementally increasing said cap over a predetermined period of time.

11. A climate control appliance (5) according to any one of claims 7 to 10, wherein the cap is dynamically adjusted to match the demand level of said plurality of climate control appliances (1, 2, 3, 4, 5, 6) to a time-varying power supply level.

12. A building management system comprising a plurality of climate control appliances (1, 2, 3, 4, 5, 6) each of which is a climate control appliance according to any one of claims 7 to 11.

13. A building management system according to claim 12, wherein all appliances in said group which are not in said determined subset are placed in an inactive state.

14. A building management system according to claim 12 or claim 13, wherein the processor of each device is further arranged to:
send and receive messages to/from each of the neighbouring appliances (1, 2, 3, 4, 5, 6), said messages including: an instruction for the neighbouring appliance to determine the climate parameter associated with the area around that appliance at the end of its current running cycle if the appliance was to become inactive; the results of such a determination; and an instruction to a selected a currently active appliance which is not in said subset to become inactive, and wherein:
a first climate control appliance (5) which has reached the end of its running cycle is arranged to send a message to each of its neighbouring appliances (1, 2, 3, 4, 6);
each neighbouring appliance which is currently active is arranged to send the results of its determination to the first appliance; and
the first appliance (5) is arranged to communicate an instruction to become inactive to any currently active appliance which is not in said subset.

15. A building management system according to any one of claims 12 to 14, further including a controller for said climate control appliances (1, 2, 3, 4, 5, 6), wherein said controller is arranged to dynamically adjust said cap to match the demand level of said plurality of climate control appliances (1, 2, 3, 4, 5, 6) to a time-varying power supply level.

## Patentansprüche

1. Verfahren zur Steuerung von Leistungsverbrauch in einer Vielzahl von Klimasteuervorrichtungen (1, 2, 3, 4, 5, 6), die jeweils mit einer Vielzahl von Nachbarvorrichtungen verbunden sind und einen Betriebszyklus von vorbestimmter Länge aufweisen, wobei das Verfahren die folgenden Schritte umfasst:
Einstellen einer Obergrenze für den Leistungsverbrauch von jeder Gruppe von Vorrichtungen, die eine Vorrichtung (1, 2, 3, 4, 5, 6) und deren Nachbarvorrichtungen umfasst;
Einstellen eines Schwellenwerts für einen Klimaparameter, der Werte für den Parameter in eine bevorzugte Richtung und eine nicht-bevorzugte Richtung trennt;
**dadurch gekennzeichnet, dass**:
wenn eine erste der Klimasteuervorrichtungen (5) das Ende ihres Betriebszyklus erreicht:
Messen eines Klimaparameters, der dem Bereich um die erste Klimasteuervorrichtung (5) herum zugeordnet ist;
wobei das Bestimmen der ersten Klimasteuervorrichtung (5), ob diese für den nachfolgenden Betriebszyklus inaktiv ist, dazu führen wird, dass der Klimaparameter auf die bevorzugte Seite des Schwellenwerts fällt;
wobei, wenn dies zutrifft, die erste Vorrichtung (5) innerhalb des darauffolgenden Betriebszyklus in einen inaktiven Zustand versetzt wird;
wobei, wenn dies nicht zutrifft:
die Vorrichtung (5) bewirkt, dass jede ihrer Nachbarvorrichtungen, die gerade aktiv ist, den Klimaparameter, der dem Bereich um diese Vorrichtung herum zugeordnet ist, am Ende von deren aktuellen Betriebszyklus bestimmt, wenn die Vorrichtung inaktiv werden sollte;
die Vorrichtung (5) eine Teilmenge der ersten Vorrichtung (5) und der gerade aktiven Nachbarvorrichtungen, die aktiv sein sollten, bestimmt, wobei die Teilmenge aus denjenigen Vorrichtungen besteht, für welche der bestimmte Klimaparameter am wenigsten bevorzugt ist, und die Anzahl von Vorrichtungen in dieser Teilmenge derart ausgewählt ist, dass sichergestellt wird, dass die Obergrenze nicht überschritten wird.

2. Verfahren gemäß Anspruch 1, ferner umfassend den Schritt des Versetzens aller Vorrichtungen in der Gruppe, die nicht in der bestimmten Teilmenge sind, in einen inaktiven Zustand.

3. Verfahren gemäß Anspruch 1 oder Anspruch 2, worin der Schritt des Bewirkens den Unter-Schritt von Folgendem beinhaltet:
Senden durch die erste Klimasteuervorrichtung (5) einer Nachricht an jede ihrer Nachbarvorrichtungen,
und der Schritt des Bestimmens die folgenden Unter-Schritte beinhaltet:
Senden durch jede Nachbarvorrichtung, die gerade aktiv ist, der Ergebnisse von deren Bestimmung an die erste Vorrichtung (5); und
Übermitteln durch die erste Vorrichtung (5) eines Befehls, um inaktiv zu werden, an irgendeine gerade aktive Vorrichtung, die nicht in der Teilmenge ist.

4. Verfahren gemäß einem der Ansprüche 1 bis 3, ferner umfassend die folgenden Schritte:
Bestimmen der Belegung eines Bereichs, der durch mindestens eine der Klimasteuervorrichtungen (1, 2, 3, 4, 5, 6) versorgt wird; und
Einstellen der Obergrenze für die Gruppe von Vorrichtungen, welche die mindestens eine Klimasteuervorrichtung auf Basis der Belegungsbestimmung umfassen.

5. Verfahren gemäß einem der Ansprüche 1 bis 4, ferner umfassend den Schritt des
Einstellens der Obergrenze für eine oder mehrere der Gruppen von Vorrichtungen oder des Entfernens der Obergrenze für eine oder mehrere der Gruppen von Vorrichtungen durch schrittweises Erhöhen der Obergrenze innerhalb eines vorbestimmten Zeitraums.

6. Verfahren gemäß einem der Ansprüche 1 bis 5, worin die Obergrenze dynamisch eingestellt wird, um den Bedarfswert der Vielzahl von Klimasteuervorrichtungen (1, 2, 3, 4, 5, 6) mit einem zeitlich variierenden Leistungsversorgungspegel abzugleichen.

7. Klimasteuervorrichtung (5), die mit einer Vielzahl von Nachbarklimasteuervorrichtungen (1, 2, 3, 4, 5, 6) verbunden ist und einen Betriebszyklus von vorbestimmter Länge aufweist, wobei die Klimasteuervorrichtung einen Prozessor aufweist;
**dadurch gekennzeichnet, dass** der Prozessor zu Folgendem ausgelegt ist:
wenn die Klimasteuervorrichtung (5) das Ende ihres Betriebszyklus erreicht:
Messen eines Klimaparameters, der dem Bereich um die Klimasteuervorrichtung (5) herum zugeordnet ist;
Bestimmen, ob dann, wenn diese innerhalb des darauffolgenden Betriebszyklus inaktiv ist, der Klimaparameter auf die bevorzugte Seite eines vorbestimmten Schwellenwerts für diesen Klimaparameter fallen wird, der Werte für den Parameter in eine bevorzugte Richtung und eine nicht-bevorzugte Richtung trennt;
wenn dies zutrifft, Versetzen der Vorrichtung (5) in einen inaktiven Zustand innerhalb ihres nächsten Betriebszyklus;
wenn dies nicht zutrifft:
Kommunizieren mit jeder ihrer Nachbarvorrichtungen, die gerade aktiv ist um zu bewirken, dass diese Vorrichtungen den Klimaparameter, der dem Bereich um diese Vorrichtung herum zugeordnet ist, am Ende von deren Betriebszyklus bestimmen, wenn die Vorrichtung inaktiv werden sollte; und
Bestimmen einer Teilmenge der Vorrichtung (5) und der gerade aktiven Nachbarvorrichtungen, die aktiv sein sollten, wobei die Teilmenge aus denjenigen Vorrichtungen besteht, für die der bestimmte Klimaparameter am wenigsten bevorzugt ist, und die Anzahl von Vorrichtungen in der Teilmenge derart ausgewählt ist, dass sichergestellt wird, dass eine vorbestimmte Obergrenze für den Leistungsverbrauch der Gruppe von Vorrichtungen, die diese Vorrichtung und ihre Nachbarvorrichtungen umfassen, nicht überschritten wird.

8. Klimasteuervorrichtung (5) gemäß Anspruch 7, worin der Prozessor ferner zu Folgendem ausgelegt ist:
Senden und Empfangen von Nachrichten an/von jede/jeder der Nachbarvorrichtungen (1, 2, 3, 4, 5, 6), wobei die Nachrichten einen Befehl für die Nachbarvorrichtung, den Klimaparameter, der dem Bereich um diese Vorrichtung herum zugeordnet ist, am Ende ihrs Betriebszyklus zu bestimmen, wenn die Vorrichtung inaktiv werden sollte; die Ergebnisse einer derartigen Bestimmung; und einen Befehl an eine ausgewählte, gerade aktive Vorrichtung, die nicht in der Teilmenge ist, inaktiv zu werden, umfassen.

9. Klimasteuervorrichtung (5) gemäß Anspruch 7 oder Anspruch 8, worin die Vorrichtung (5) ferner einen Belegungsbestimmungssensor umfasst, der ausgelegt ist, die Belegung eines Bereichs, der durch die Klimasteuervorrichtung (5) versorgt wird, zu bestimmen, und worin der Prozessor ferner ausgelegt ist, die Obergrenze für die Gruppe von Vorrichtungen, welche die Klimasteuervorrichtung umfassen, auf Basis der Belegungsbestimmung einzustellen.

10. Klimasteuervorrichtung (5) gemäß einem der Ansprüche 7 bis 9, worin der Prozessor ausgelegt ist, einen Befehl von einer externen Steuereinheit zu empfangen, um die Obergrenze auf eine neue Höhe einzustellen oder diese Obergrenze zu entfernen und auf diesen Befehl durch schrittweises Erhöhen der Obergrenze innerhalb eines vorbestimmten Zeitraums zu reagieren.

11. Klimasteuervorrichtung (5) gemäß einem der Ansprüche 7 bis 10, worin die Obergrenze dynamisch eingestellt wird, um das Bedarfsniveau der Vielzahl von Klimasteuervorrichtungen (1, 2, 3, 4, 5, 6) mit einem zeitlich variierenden Leistungsversorgungspegel abzugleichen.

12. Gebäudeverwaltungssystem, umfassend eine Vielzahl von Klimasteuervorrichtungen (1, 2, 3, 4, 5, 6), von denen jede eine Klimasteuervorrichtung gemäß einem der Ansprüche 7 bis 11 ist.

13. Gebäudeverwaltungssystem gemäß Anspruch 12, worin alle Vorrichtungen in dieser Gruppe, die nicht in der bestimmten Teilmenge sind, in einen inaktiven Zustand versetzt sind.

14. Gebäudeverwaltungssystem gemäß Anspruch 12 oder Anspruch 13, worin der Prozessor von jeder Vorrichtung ferner zu Folgendem ausgelegt ist:
Senden und Empfangen von Nachrichten an/von jede/jeder der Nachbarvorrichtungen (1, 2, 3, 4, 5, 6), wobei die Nachrichten Folgendes umfassen: einen Befehl für die Nachbarvorrichtung, den Klimaparameter, der dem Bereich um diese Vorrichtung herum zugeordnet ist, am Ende ihres Betriebszyklus zu bestimmen, wenn die Vorrichtung inaktiv werden sollte; die Ergebnisse einer derartigen Bestimmung; und einen Befehl an eine ausgewählte, gerade aktive Vorrichtung, die nicht in der Teilmenge ist, inaktiv zu werden, und worin:
eine erste Klimasteuervorrichtung (5), die das Ende ihres Betriebszyklus erreicht hat, ausgelegt ist, eine Nachricht an jede ihrer Nachbarvorrichtungen (1, 2, 3, 4, 5, 6) zu senden;
jede Nachbarvorrichtung, die gerade aktiv ist, ausgelegt ist, die Ergebnisse ihrer Bestimmung an die erste Vorrichtung zu senden; und
die erste Vorrichtung (5) ausgelegt ist, einen Befehl, inaktiv zu werden, an jede gerade aktive Vorrichtung, die nicht in der Teilmenge ist, zu übermitteln.

15. Gebäudeverwaltungssystem gemäß einem der Ansprüche 12 bis 14, ferner umfassend eine Steuereinheit für die Klimasteuervorrichtungen (1, 2, 3, 4, 5, 6), worin die Steuereinheit ausgelegt ist, die Obergrenze dynamisch einzustellen, um das Bedarfsniveau der Vielzahl von Klimasteuervorrichtungen (1, 2, 3, 4, 5, 6) mit einem zeitlich variierenden Leistungsversorgungspegel abzugleichen.

## Revendications

1. Procédé de régulation de consommation d'énergie dans une pluralité d'appareils de climatisation (1, 2, 3, 4, 5, 6) qui sont chacun connectés à une pluralité d'appareils voisins et qui présentent chacun un cycle de fonctionnement d'une durée prédéterminée, le procédé incluant les étapes ci-dessous consistant à :
définir un plafond pour la consommation d'énergie de chaque groupe d'appareils comprenant un appareil (1, 2, 3, 4, 5, 6) et ses voisins ;
définir une valeur de seuil, pour un paramètre climatique, séparant des valeurs pour ledit paramètre en une direction préférée et une direction non préférée ;
**caractérisé en ce que** :
lorsqu'un premier desdits appareils de climatisation (5) atteint la fin de son cycle de fonctionnement :
mesurer un paramètre climatique associé à la zone environnant ledit premier appareil de climatisation (5) ;
le premier appareil de climatisation (5) déterminant si le fait d'être inactif pendant le cycle de fonctionnement successif aura pour conséquence que ledit paramètre climatique tombera du côté préféré de ladite valeur de seuil ;
le cas échéant, ledit premier appareil (5) est placé dans un état inactif pour son cycle de fonctionnement successif ;
sinon, le premier appareil (5) :
amène chacun de ses appareils voisins qui est actuellement actif à déterminer le paramètre climatique associé à la zone environnant cet appareil à la fin de son cycle de fonctionnement en cours si l'appareil devenait inactif ;
détermine un sous-ensemble du premier appareil (5) et des appareils voisins actuellement actifs, lequel devrait être actif, le sous-ensemble correspondant à ces appareils pour lesquels le paramètre climatique déterminé est le moins préféré, et le nombre d'appareils dans ledit sous-ensemble étant sélectionné de manière à garantir que ledit plafond n'est pas dépassé.

2. Procédé selon la revendication 1, incluant en outre l'étape consistant à placer dans un état inactif tous les appareils dudit groupe qui ne sont pas dans ledit sous-ensemble déterminé.

3. Procédé selon la revendication 1 ou 2, dans lequel l'étape consistant à amener à la détermination implique la sous-étape ci-dessous dans laquelle :
le premier appareil de climatisation (5) envoie un message à chacun de ses appareils voisins ; et
l'étape de détermination implique les sous-étapes ci-dessous dans lesquelles :
chaque appareil voisin qui est actuellement actif envoie les résultats de sa détermination au premier appareil (5) ; et
le premier appareil (5) communique une instruction de désactivation à tout appareil actuellement actif qui n'est pas dans ledit sous-ensemble.

4. Procédé selon l'une quelconque des revendications 1 à 3, incluant en outre les étapes ci-dessous consistant à :
déterminer l'occupation d'une zone desservie par au moins l'un desdits appareils de climatisation (1, 2, 3, 4, 5, 6) ; et
définir ledit plafond pour le groupe d'appareils comprenant ledit au moins un appareil de climatisation sur la base de ladite détermination d'occupation.

5. Procédé selon l'une quelconque des revendications 1 à 4, incluant en outre l'étape ci-dessous consistant à :
ajuster ledit plafond pour un ou plusieurs desdits groupes d'appareils ou supprimer ledit plafond pour un ou plusieurs desdits groupes d'appareils en augmentant de manière incrémentielle ledit plafond sur une période de temps prédéterminée.

6. Procédé selon l'une quelconque des revendications 1 à 5, dans lequel le plafond est ajusté dynamiquement en vue de faire correspondre le niveau de demande de ladite pluralité d'appareils de climatisation (1, 2, 3, 4, 5, 6) à un niveau d'alimentation électrique variable dans le temps.

7. Appareil de climatisation (5) qui est connecté à une pluralité d'appareils de climatisation voisins (1, 2, 3, 4, 6) et qui présente un cycle de fonctionnement d'une durée prédéterminée, l'appareil de climatisation disposant d'un processeur ;
**caractérisé en ce que** le processeur est apte à :
lorsque ledit appareil de climatisation (5) atteint la fin de son cycle de fonctionnement :
mesurer un paramètre climatique associé à la zone environnant ledit appareil de climatisation (5) ;
déterminer si le fait d'être inactif pendant le cycle de fonctionnement successif aura pour conséquence que ledit paramètre climatique tombera du côté préféré d'une valeur de seuil prédéterminée pour ledit paramètre climatique, laquelle sépare des valeurs dudit paramètre en une direction préférée et une direction non préférée ;
le cas échéant, placer ledit appareil (5) dans un état inactif pour son cycle de fonctionnement successif ;
sinon :
communiquer avec chaque appareil de ses appareils voisins qui est actuellement actif afin d'amener ces appareils à déterminer le paramètre climatique associé à la zone environnant cet appareil à la fin de son cycle de fonctionnement en cours si l'appareil devenait inactif ; et
déterminer un sous-ensemble dudit appareil (5) et des appareils voisins actuellement actifs, lequel devrait être actif, le sous-ensemble correspondant à ces appareils pour lesquels le paramètre climatique déterminé est le moins préféré, et le nombre d'appareils dans ledit sous-ensemble étant sélectionné de manière à garantir qu'un plafond prédéterminé pour la consommation d'énergie du groupe d'appareils comprenant ledit appareil et ses voisins n'est pas dépassé.

8. Appareil de climatisation (5) selon la revendication 7, dans lequel le processeur est en outre agencé de manière à :
envoyer et recevoir des messages à destination / en provenance de chacun des appareils voisins (1, 2, 3, 4, 6), lesdits messages incluant : une instruction ordonnant à l'appareil voisin de déterminer le paramètre climatique associé à la zone environnant cet appareil à la fin de son cycle de fonctionnement en cours, si l'appareil voisin devait devenir inactif ; les résultats d'une telle détermination ; et une instruction ordonnant de sélectionner un appareil actuellement actif qui n'est pas dans ledit sous-ensemble, afin de le désactiver.

9. Appareil de climatisation (5) selon la revendication 7 ou 8, dans lequel l'appareil (5) inclut en outre un capteur de détermination d'occupation qui est agencé de manière à déterminer l'occupation d'une zone desservie par ledit appareil de climatisation (5), et dans lequel le processeur est en outre agencé de manière à définir ledit plafond pour le groupe d'appareils comprenant ledit appareil de climatisation, sur la base de ladite détermination d'occupation.

10. Appareil de climatisation (5) selon l'une quelconque des revendications 7 à 9, dans lequel le processeur est agencé de manière à recevoir une instruction en provenance d'un contrôleur externe, ordonnant d'ajuster ledit plafond à un nouveau niveau, ou de supprimer ledit plafond, et à répondre à ladite instruction en augmentant de manière incrémentielle ledit plafond sur une période de temps prédéterminée.

11. Appareil de climatisation (5) selon l'une quelconque des revendications 7 à 10, dans lequel le plafond est ajusté dynamiquement en vue de faire correspondre le niveau de demande de ladite pluralité d'appareils de climatisation (1, 2, 3, 4, 5, 6) à un niveau d'alimentation électrique variable dans le temps.

12. Système de gestion de bâtiment comprenant une pluralité d'appareils de climatisation (1, 2, 3, 4, 5, 6) dont chacun correspond à un appareil de climatisation selon l'une quelconque des revendications 7 à 11.

13. Système de gestion de bâtiment selon la revendication 12, dans lequel tous les appareils dudit groupe qui ne sont pas dans ledit sous-ensemble déterminé sont placés dans un état inactif.

14. Système de gestion de bâtiment selon la revendication 12 ou 13, dans lequel le processeur de chaque dispositif est en outre agencé de manière à :
envoyer et recevoir des messages à destination / en provenance de chacun des appareils voisins (1, 2, 3, 4, 5, 6), lesdits messages incluant : une instruction ordonnant à l'appareil voisin de déterminer le paramètre climatique associé à la zone environnant cet appareil à la fin de son cycle de fonctionnement en cours, si l'appareil voisin devait devenir inactif ; les résultats d'une telle détermination ; et une instruction ordonnant de sélectionner un appareil actuellement actif qui n'est pas dans ledit sous-ensemble, afin de le désactiver ; et dans lequel :
un premier appareil de climatisation (5) qui a atteint la fin de son cycle de fonctionnement est agencé de manière à envoyer un message à chacun de ses appareils voisins (1, 2, 3, 4, 6) ;
chaque appareil voisin qui est actuellement actif est agencé de manière à transmettre les résultats de sa détermination au premier appareil ; et
le premier appareil (5) est agencé de manière à communiquer une instruction de désactivation à tout appareil actuellement actif qui n'est pas dans ledit sous-ensemble.

15. Système de gestion de bâtiment selon l'une quelconque des revendications 12 à 14, incluant en outre un contrôleur pour lesdits appareils de climatisation (1, 2, 3, 4, 5, 6), dans lequel ledit contrôleur est agencé de manière à ajuster dynamiquement ledit plafond afin de faire correspondre le niveau de demande de ladite pluralité d'appareils de climatisation (1, 2, 3, 4, 5, 6) à un niveau d'alimentation électrique variable dans le temps.
